# EUROPEAN PATENT SPECIFICATION

(11) **EP 3 652 064 B1**
(45) Date of publication and mention of the grant of the patent: **26.05.2021**
(21) Application number: 18739504.1
(22) Date of filing: 05.07.2018
(51) Int. Cl.: B63H 3/10, B63H 21/21, F02D 29/02, F02D 41/14, F02D 31/00, F02D 35/02

(54) **METHOD FOR CONTROLLING THE PROPULSION OF A SHIP**
VERFAHREN ZUR STEUERUNG DES ANTRIEBS EINES SCHIFFS
PROCÉDÉ POUR COMMANDE DE LA PROPULSION D'UN NAVIRE

(30) Priority: 14.07.2017 SE 1750935
(43) Date of publication of application: 20.05.2020
(73) Proprietor: Lean Marine Sweden AB, 417 64 Göteborg (SE)
(72) Inventor: IDESKOG, Linus, 475 32 Öckerö (SE)
(74) Representative: Valea AB
(86) International application number: PCT/EP2018/068248
(87) International publication number: WO 2019/011779

(56) References cited:
- EP-A1- 2 993 322
- EP-A2- 2 813 693
- WO-A1-2016/169991
- DD-A1- 156 853
- JP-A- S51 143 289
- Kazuyuki Maeda ET AL: "Reduction Methods of NOx Emission from Ships", , 24 February 1995 (1995-02-24), pages 8-15, XP055507840, Retrieved from the Internet: URL:http://archive.jime.jp/e/publication/b ulletin/english/pdf/mv26n011998p8.pdf [retrieved on 2018-09-18]

## Description

### TECHNICAL FIELD

The present invention relates to a method for controlling the propulsion of a ship. Moreover, the present invention relates to a computer program, a computer readable medium, a control unit and a ship.

### BACKGROUND

A controllable pitch ship propeller is designed such that the angle of attack of the blade can be continuously varied. In this manner, the torque of the main engine may be varied. A controllable pitch propeller is common for medium sized ships (50 - 150 m I.b.p.) with medium to high requirements on maneuverability.

Although a ship with a controllable pitch propeller can be maneuvered with an appropriated flexibility, contemporary ships often consume more fuel than necessary, for instance due to inappropriate operation settings of the ship's engine or the controllable pitch propeller

Document WO 2016/169991 A1 discloses a method for controlling the propulsion of a ship comprising an engine and a controllable pitch propeller and taking into consideration the uel consumption. Nevertheless, this document does not disclose a method which takes into consideration the pressure inside a cylinder.

### SUMMARY

In view of the above, according to a first aspect of the present invention, an object of the present invention is to provide a method for controlling the propulsion of a ship wherein the engine of the ship is operated in appropriate operating conditions.

The above aspect is obtained by a method according to claim 1.

The first aspect of the present invention relates to a method for controlling the propulsion of a ship. The ship comprises an engine and a controllable pitch propeller. The engine comprises least one cylinder. The torque and engine speed are adjusted to correspond to an output set point value, wherein the adjustment is such that the ship is operated in an operating condition with an engine speed of the engine and a propeller pitch of the controllable pitch propeller such that the fuel consumption of the ship is brought and/or held within a desired fuel consumption range.

According to the first aspect of the present invention, the method comprises:
- determining a top pressure value indicative of a top pressure in the at least one cylinder and
- reducing the torque of the engine upon detection that the top pressure value exceeds a top pressure threshold value.

Excessive top pressures may be harmful to the engine. As such, by virtue of the above method according to the second aspect of the present invention, the risk of damaging the engine may be kept appropriately low.

Optionally, the engine speed of the engine is increased upon detection that the top pressure value exceeds the top pressure threshold value.

Optionally, for the first aspect of the present invention, the feature of reducing the torque of the engine comprises reducing the propeller pitch of the controllable pitch propeller.

A second aspect of the present invention relates to a computer program comprising program code means for performing the steps of the first aspect of the present invention when the program is run on a computer.

A third aspect of the present invention relates to a computer readable medium carrying a computer program comprising program code means for performing the steps of the first aspect of the present invention when the program product is run on a computer.

A fourth aspect of the present invention relates to a control unit for controlling the propulsion of a ship. The ship comprises an engine and a controllable pitch propeller. The engine comprises at least one cylinder. The control unit is adapted to receive a signal indicative of an output set point value. The control unit is also adapted to issue control ) signals to control the engine speed of the engine and the propeller pitch of the controllable pitch propeller in response to the output set point value. The control signals are determined such that the ship is operated in an operating condition, corresponding to the output set point value, with an engine speed of the engine and a propeller pitch of the controllable pitch propeller such that the fuel consumption of the ship is brought and/or held within a desired fuel consumption range.

According to the fourth aspect of the present invention, the control unit is adapted to:
- receive a top pressure signal with a top pressure value indicative of a top pressure in the at least one cylinder and to
- issue a control signal to reduce the torque of the engine upon detection that the top pressure value exceeds a top pressure threshold value.

Optionally, the control unit is adapted to issue a control signal to increase the engine speed of the engine upon detection that the top pressure value exceeds the top pressure threshold value.

Optionally, the control unit is adapted to issue a control signal to reduce the propeller pitch of the controllable pitch propeller in order to reduce the torque of the engine.

A fifth aspect of the present invention relates to a ship comprising a control unit according to the fifth or sixth aspect of the present invention.

### BRIEF DESCRIPTION OF THE DRAWINGS

With reference to the appended drawings, below follows a more detailed description of embodiments of the invention cited as examples.

In the drawings:
Fig. 1 illustrates a typical load limit curve for an engine;
Fig. 2 illustrates a calculation of an output set value for engine speed and control of torque in order to obtain the correct requested effect;
Fig. 3 is diagram of an example control logic, and
Fig. 4 is block diagram of an embodiment of a ship.

### DETAILED DESCRIPTION OF PREFERRED EMBODIMENTS

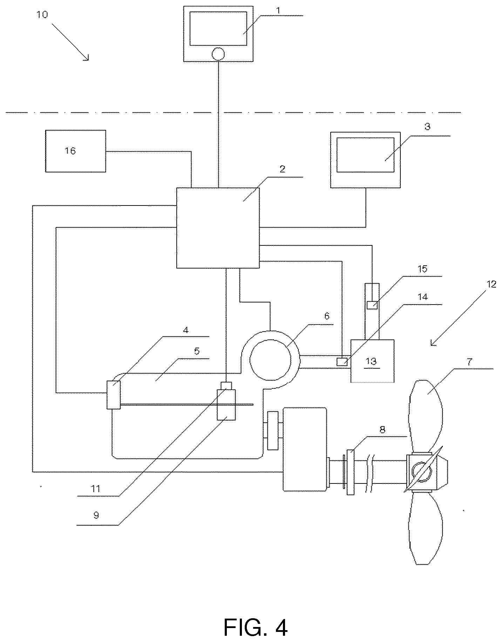

Fig. 4 illustrates an embodiment of a ship 10. The Fig. 4 ship comprises an engine 5, which may also be referred to as a main engine, and a controllable pitch propeller 7. The torque and engine speed may be adjusted to correspond to an output set point value, e.g. a desired or target engine power output value. Purely by way of example, the output set point value may be set using on-board or remotely located user board 1 illustrated in Fig. 4. Generally, the output set point value is indicative of a desired power produced by the engine 5 and the controllable pitch propeller 7.

Purely by way of example, and as indicated in Fig. 4, a signal indicative of the output set point value may be sent from the user board 1 to an on-board or remotely located control unit 2. As a non-limiting example, the control unit 2 may receive information from the engine 5, an engine speed regulator 4, a turbo assembly 6, the controllable pitch propeller 7 and possibly a shaft output sensor 8. Furthermore, though again purely by way of example, the ship 10 may comprise an additional user board 3 for setup of the system and data reading.

Moreover, the control unit 2 may be adapted to issue control signals to the engine 5 and the propeller 7 - or a propeller regulating arrangement (not show) - to thereby control the engine speed of the engine 5 and the propeller pitch of the controllable pitch propeller 7. By controlling the propeller pitch, the torque of the engine 5 may be controlled.

Additionally, the Fig. 4 embodiment of the ship 10 comprises a cylinder set comprising least one cylinder 9. Moreover, in Fig. 4, the embodiment of the ship 10 disclosed therein comprises a cylinder pressure sensor 11 adapted to determine the pressure in the at least one cylinder 9. By way of example, the cylinder pressure sensor 11 may be adapted to determine top pressure in at least one of the cylinders.

Fig. 4 also illustrates as a mere example, which is not part of the invention, that the ship 10 illustrated therein comprises an exhaust gas system 12 adapted to guide exhaust gas from the engine 5. Moreover, as indicated in Fig. 4, the exhaust gas system 12 may comprise a NOₓ reduction assembly 13. Purely by way of example, such a NOₓ reduction assembly may comprise a catalyst adapted to reduce the NOₓ content in the exhaust gases.

Further, Fig. 4 illustrates as a mere example, which is not part of the invention, that the ship 10 may comprise an upstream NOₓ sensor 14 located between, as seen in an intended direction of exhaust gas flow, the engine 5 and the NOₓ reduction assembly 13. Instead of, or in addition to the upstream NOₓ sensor 14, the ship may comprise a downstream NOₓ sensor 15 located downstream, as seen in an intended direction of exhaust gas flow, of the NOₓ reduction assembly 15 in the exhaust gas system 12.

Furthermore, the Fig. 4 ship 10 comprises as a mere example, which is not part of the invention, a position sensor 16, which for instance may comprise a global positioning system, adapted to determine the geographical location of the ship 10.

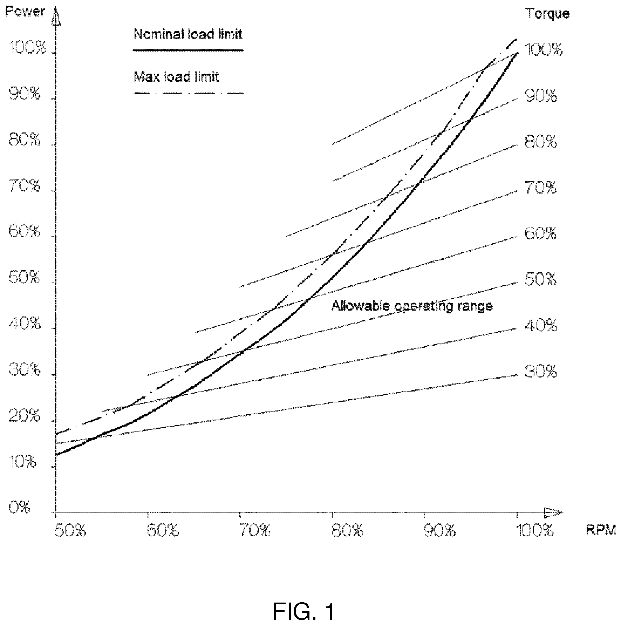

Fig. 1 illustrates a load limit curve for an engine, for instance the Fig. 4 engine 5. As may be gleaned from Fig. 1, the graph illustrated therein presents the engine speed (presented as a percentage of maximum engine speed) on the abscissa and the power on the ordinate. Moreover, Fig. 1 includes isolines for different torque levels (also presented as percentage of the maximum torque producible by the engine). As may be realized from Fig. 1, the power produced by the engine increases as the torque increases. In a similar vein, the power produced by the engine increases as the engine speed increases.

Moreover, as may be realized from Fig. 1, a certain power level may be obtained by a plurality of different combinations of engine torque and engine speed. Generally, from a fuel consumption point of view, it is beneficial to operate the engine at a high torque level.

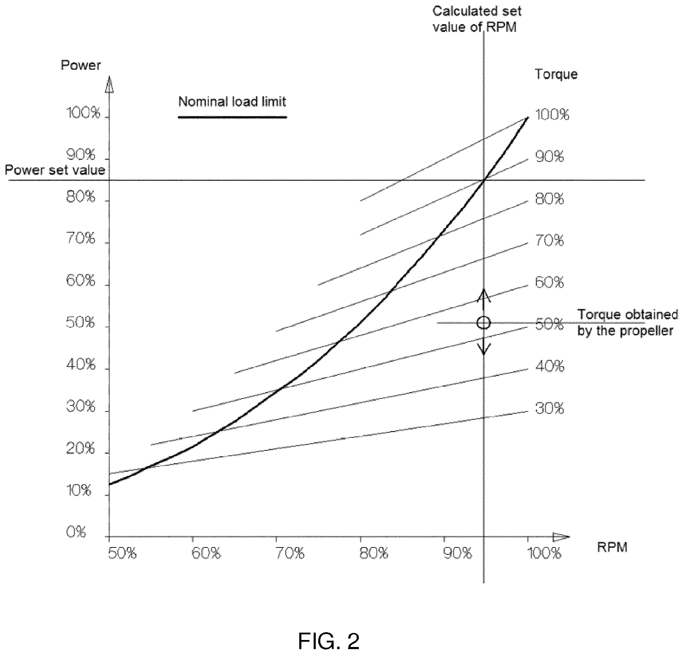

As such, and with reference to Fig. 2, upon receipt of an output set point value, for instance indicative of the power produced by the engine, the engine is preferably operated at a condition with a high torque level, for instance at the highest torque level possible in view of the engine's load limit, and the engine speed is controlled such that the combination of engine speed and engine torque corresponds to the requested power, or the output set point value.

However, the present invention proposes also taking additional parameters into account when determining a suitable combination of engine torque and engine speed in order to meet the requested power, or the output set point value.

As the present invention relates to a method for controlling the propulsion of a ship 10. The ship 10 comprises an engine 5 and a controllable pitch propeller 7, wherein torque and engine speed are adjusted to correspond to an output set point value. As has been intimated hereinabove, the torque of the engine may be controlled by controlling the propeller pitch of the controllable pitch propeller 7.

The adjustment of the torque and engine speed is such that the ship 10 is operated in an operating condition with an engine speed of the engine 5 and a propeller pitch of the controllable pitch propeller 7 such that the fuel consumption of the ship is brought and/or held within a desired fuel consumption range. As such, with reference to Fig. 2, the engine speed and the propeller pitch are generally controlled such that the engine torque is as high as possible in view of the engine's load limit curve and also in view of further boundary conditions, as will be elaborated on hereinbelow.

As such, a first aspect of the present invention relates to a method for controlling the propulsion of a ship wherein the method comprises determining a top pressure value indicative of a top pressure in at least one cylinder 9 (see Fig. 4). Purely by way of example, the top pressure value may be determined using a cylinder pressure sensor, such as the cylinder pressure sensor 11 presented hereinabove in relation to Fig. 4. Moreover, the method according to the second aspect of the present invention comprises reducing the torque of the engine 5 upon detection that the top pressure value exceeds a top pressure threshold value.

Purely by way of example, the top pressure threshold value may be determined in order to reduce the risk of excessive loads and/or excessive wear of the engine 5. However, instead of, or in addition to, the above, the top pressure threshold value may be determined such that for instance engine emissions are kept within desired ranges. Purely by way of example, a correlation between top pressures and NOₓ emissions may be generated and a top pressure corresponding to a maximum desirable NOₓ emission level may be used as the top pressure threshold value.

In the event that an engine comprises a plurality of cylinders, the top pressure may be measured in one of the cylinders. Alternatively, the top pressure may be measured in two or more of the cylinders and the maximum top pressure measured in the one or more cylinders may be used as the top pressure value which consequently is compared to the top pressure threshold value.

Furthermore, the engine speed of the engine 5 may be increased upon detection that the top pressure value exceeds the top pressure threshold value.

Irrespective of which boundary condition that is used when controlling the propulsion of the ship 10, the feature of reducing the torque of the engine 5 may comprises reducing the propeller pitch of the controllable pitch propeller 7.

Moreover, it should be noted that the method embodiment presented hereinabove may be carried out by one or more control unit(s), such as the control unit 2 presented hereinabove in relation to Fig. 4. As such, the control unit 2 may be adapted to receive signals indicative an output set point value, for instance using the user board 1 illustrated in Fig. 4. Moreover, as has been intimated hereinabove, the control unit 2 may also be adapted to receive signals indicative of the engine speed of the engine 5 and the propeller pitch of the controllable pitch propeller 7. Further, the control unit 2 may also be adapted to receive signals indicative of the relevant boundary condition, e.g. the top pressure value, and to compare the thus received signal to a corresponding threshold value. Moreover, the control unit 2 may be adapted to issue control signals indicative of the engine speed of the engine and the propeller pitch of the controllable pitch propeller in response to the output set point value, taking the above boundary condition into account.

As such, the control unit 2 of the ship 10 may be adapted to perform the procedure of the method presented hereinabove.

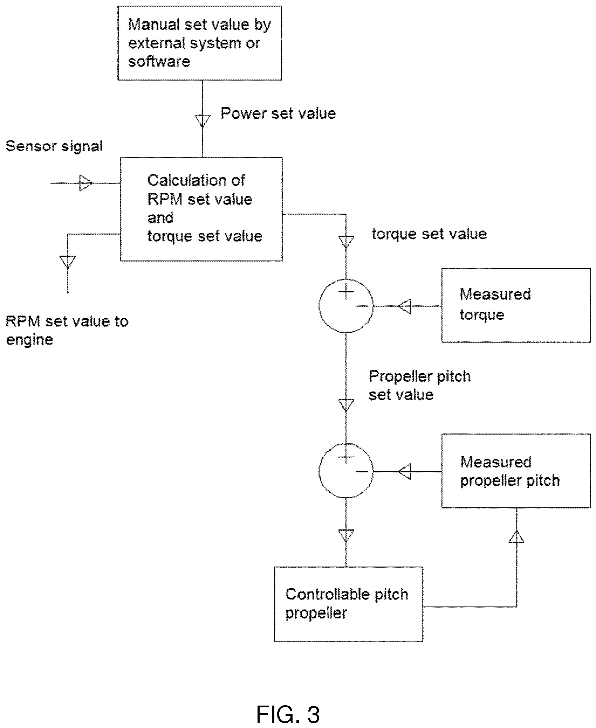

Fig. 3 illustrates an example of a control logic for a control unit 2. As may be gleaned from Fig. 3, the control logic may comprise a regulator for controlling the engine speed of the engine and the propeller pitch of the controllable pitch propeller. The Fig. 3 control logic may also comprise means for taking one or more of the above discussed boundary conditions into account when controlling the engine speed and the propeller pitch. As such, the regulator may be adapted to receive sensor signals, such as signals from the previously discussed cylinder pressure sensor 11, and use information in the signals when determining set values for engine speed and torque, i.e. the propeller pitch of the controllable pitch propeller.

## Claims

1. A method for controlling the propulsion of a ship (10), said ship (10) comprising an engine (5) and a controllable pitch propeller (7), said engine (5) comprising at least one cylinder (9), wherein torque and engine speed are adjusted to correspond to an output set point value, wherein the adjustment is such that said ship (10) is operated in an operating condition with an engine speed of said engine (5) and a propeller pitch of said controllable pitch propeller (7) such that the fuel consumption of said ship (10) is brought and/or held within a desired fuel consumption range **characterized in that** the method comprises:
- determining a top pressure value indicative of a top pressure in said at least one cylinder (9) and
- reducing the torque of said engine (5) upon detection that the top pressure value exceeds a top pressure threshold value.

2. The method according to claim 1, wherein the engine speed of said engine (5) is increased upon detection that the top pressure value exceeds said top pressure threshold value.

3. The method according to any one of the preceding claims, wherein said feature of reducing the torque of said engine (5) comprises reducing the propeller pitch of said controllable pitch propeller (7).

4. A computer program comprising program code means for performing the steps of any of the preceding claims when the program is run on a computer.

5. A computer readable medium carrying a computer program comprising program code means for performing the steps of any of claims 1 - 4 when the program product is run on a computer.

6. A control unit (2) for controlling the propulsion of a ship (10), said ship (10) comprising an engine (5) and a controllable pitch propeller (7), said engine (5) comprising at least one cylinder (9), wherein said control unit (2) is adapted to receive a signal indicative of an output set point value, said control unit (2) also being adapted to issue control signals to control the engine speed of said engine (5) and the propeller pitch of said controllable pitch propeller (7) in response to said output set point value, wherein the control signals are determined such that said ship (10) is operated in an operating condition, corresponding to said output set point value, with an engine speed of said engine (5) and a propeller pitch of the controllable pitch propeller (7) such that the fuel consumption of said ship (10) is brought and/or held within a desired fuel consumption range, **characterized in that** said control unit (2) is adapted to:
- receive a top pressure signal with a top pressure value indicative of a top pressure in said at least one cylinder (9) and to
- issue a control signal to reduce the torque of said engine (5) upon detection that said top pressure value exceeds a top pressure threshold value.

7. The control unit (2) according to claim 6, wherein said control unit (2) is adapted to issue a control signal to increase said engine speed of said engine (5) upon detection that said top pressure value exceeds said top pressure threshold value.

8. The control unit (2) according to any one of claims 6 - 7, wherein said control unit (2) is adapted to issue a control signal to reduce the propeller pitch of said controllable pitch propeller (7) in order to reduce the torque of said engine (5).

9. A ship (10) comprising a control unit (2) according to any one of claims 6 - 8.

## Patentansprüche

1. Verfahren zum Steuern des Antriebs eines Schiffes (10), wobei das Schiff (10) einen Motor (5) und einen Verstellpropeller (7) umfasst, wobei der Motor (5) wenigstens einen Zylinder (9) umfasst, wobei ein Drehmoment und eine Motordrehzahl eingestellt werden, um einem Ausgangssollwert zu entsprechen, wobei die Einstellung derart ist, dass das Schiff (10) in einem Betriebszustand mit einer Motordrehzahl des Motors (5) und einer Propellersteigung des Verstellpropellers (7) derart betrieben wird, dass der Kraftstoffverbrauch des Schiffes (10) innerhalb eines gewünschten Kraftstoffverbrauchsbereich gebracht und/oder gehalten wird, **dadurch gekennzeichnet, dass** das Verfahren Folgendes umfasst:
- Bestimmen eines oberen Druckwerts, der einen oberen Druck in dem wenigstens einen Zylinder (9) anzeigt, und
- Reduzieren des Drehmoments des Motors (5) bei Erkennung, dass der obere Druckwert einen oberen Druckschwellenwert überschreitet.

2. Verfahren nach Anspruch 1, wobei die Motordrehzahl des Motors (5) bei Erkennung, dass der obere Druckwert den oberen Druckschwellenwert überschreitet, erhöht wird.

3. Verfahren nach einem der vorhergehenden Ansprüche, wobei das Merkmal des Reduzierens des Drehmoments des Motors (5) das Reduzieren der Propellersteigung des Verstellpropellers (7) umfasst.

4. Computerprogramm, das Programmcodemittel zum Durchführen der Schritte eines der vorhergehenden Ansprüche umfasst, wenn das Programm auf einem Computer ausgeführt wird.

5. Computerlesbares Medium, das ein Computerprogramm trägt, das Programmcodemittel zum Durchführen der Schritte nach einem der Ansprüche 1-4 umfasst, wenn das Programmprodukt auf einem Computer ausgeführt wird.

6. Steuereinheit (2) zum Steuern des Antriebs eines Schiffes (10), wobei das Schiff (10) einen Motor (5) und einen Verstellpropeller (7) umfasst, wobei der Motor (5) wenigstens einen Zylinder (9) umfasst, wobei die Steuereinheit (2) angepasst ist, um ein Signal zu empfangen, das einen Ausgangssollwert anzeigt, wobei die Steuereinheit (2) ebenso angepasst ist, um Steuersignale auszugeben, um die Motordrehzahl des Motors (5) und die Propellersteigung des Verstellpropellers (7) als Reaktion auf den Ausgangssollwert zu steuern, wobei die Steuersignale derart bestimmt werden, dass das Schiff (10) in einem Betriebszustand, der dem Ausgangssollwert entspricht, mit einer Motordrehzahl des Motors (5) und einer Propellersteigung des Verstellpropellers (7) derart betrieben wird, dass der Kraftstoffverbrauch des Schiffes (10) innerhalb eines gewünschten Kraftstoffverbrauchsbereichs gebracht und/oder gehalten wird, **dadurch gekennzeichnet, dass** die Steuereinheit (2) für Folgendes angepasst ist:
- Empfangen eines oberen Drucksignals mit einem oberen Druckwert, der einen oberen Druck in dem wenigstens einen Zylinder (9) anzeigt, und
- Ausgeben eines Steuersignals, um das Drehmoment des Motors (5) bei Erkennung, dass der obere Druckwert einen oberen Druckschwellenwert überschreitet, zu reduzieren.

7. Steuereinheit (2) nach Anspruch 6, wobei die Steuereinheit (2) angepasst ist, um ein Steuersignal auszugeben, um die Motordrehzahl des Motors (5) bei Erkennung, dass der obere Druckwert den oberen Druckschwellenwert überschreitet, zu erhöhen.

8. Steuereinheit (2) nach einem der Ansprüche 6-7, wobei die Steuereinheit (2) angepasst ist, um ein Steuersignal auszugeben, um die Propellersteigung des Verstellpropellers (7) zu reduzieren, um das Drehmoment des Motors (5) zu reduzieren.

9. Schiff (10), das eine Steuereinheit (2) nach einem der Ansprüche 6-8 umfasst.

## Revendications

1. Procédé de commande de la propulsion d'un navire (10), ledit navire (10) comprenant un moteur (5) et une hélice à pas réglable (7), ledit moteur (5) comprenant au moins un cylindre (9), le couple et la vitesse du moteur étant réglés pour correspondre à une valeur de consigne de sortie, le réglage étant tel que ledit navire (10) fonctionne dans un état de fonctionnement avec une vitesse de moteur dudit moteur (5) et un pas d'hélice de ladite hélice à pas réglable (7) de sorte que la consommation de carburant dudit navire (10) soit amenée et/ou maintenue dans une plage de consommation de carburant souhaitée, **caractérisé en ce que** le procédé comprend :
- la détermination d'une valeur de pression supérieure indiquant une pression supérieure dans ledit au moins un cylindre (9) et
- la réduction du couple dudit moteur (5) lors de la détection du fait que la valeur de pression supérieure dépasse une valeur seuil de pression supérieure.

2. Procédé selon la revendication 1, selon lequel la vitesse de moteur dudit moteur (5) est augmentée lors de la détection du fait que la valeur de pression supérieure dépasse ladite valeur seuil de pression supérieure.

3. Procédé selon l'une quelconque des revendications précédentes, selon lequel ladite caractéristique de réduction du couple dudit moteur (5) comprend la réduction du pas d'hélice de ladite hélice à pas réglable (7).

4. Programme informatique comprenant des moyens de code de programme permettant de réaliser les étapes de l'une quelconque des revendications précédentes lorsque le programme est exécuté sur un ordinateur.

5. Support lisible par ordinateur portant un programme informatique comprenant des moyens de code de programme permettant de réaliser les étapes de l'une quelconque des revendications 1 à 4 lorsque le produit-programme est exécuté sur un ordinateur.

6. Unité de commande (2) permettant de commander la propulsion d'un navire (10), ledit navire (10) comprenant un moteur (5) et une hélice à pas réglable (7), ledit moteur (5) comprenant au moins un cylindre (9), ladite unité de commande (2) étant adaptée pour recevoir un signal indiquant une valeur de consigne de sortie, ladite unité de commande (2) étant également adaptée pour émettre des signaux de commande destinés à commander la vitesse de moteur dudit moteur (5) et le pas de l'hélice de ladite hélice à pas réglable (7) en réponse à ladite valeur de consigne de sortie, les signaux de commande étant déterminés de telle sorte que ledit navire (10) fonctionne dans un état de fonctionnement, correspondant à ladite valeur de consigne de sortie, avec une vitesse de moteur dudit moteur (5) et un pas d'hélice de l'hélice à pas réglable (7) de telle sorte que la consommation de carburant dudit navire (10) soit amenée et/ou maintenue dans une plage de consommation de carburant souhaitée, **caractérisée en ce que** ladite unité de commande (2) est adaptée pour :
- recevoir un signal de pression supérieure présentant une valeur de pression supérieure indiquant une pression supérieure dans ledit au moins un cylindre (9) et pour
- émettre un signal de commande destiné à réduire le couple dudit moteur (5) lors de la détection du fait que ladite valeur de pression supérieure dépasse une valeur seuil de pression supérieure.

7. Unité de commande (2) selon la revendication 6, ladite unité de commande (2) étant adaptée pour émettre un signal de commande destiné à augmenter ladite vitesse de moteur dudit moteur (5) lors de la détection du fait que ladite valeur de pression supérieure dépasse ladite valeur seuil de pression supérieure.

8. Unité de commande (2) selon l'une quelconque des revendications 6 à 7, ladite unité de commande (2) étant adaptée pour émettre un signal de commande destiné à réduire le pas d'hélice de ladite hélice à pas réglable (7) afin de réduire le couple dudit moteur (5).

9. Navire (10) comprenant une unité de commande (2) selon l'une quelconque des revendications 6 à 8.
